# EUROPÄISCHE PATENTSCHRIFT

(11) **EP 3 623 484 B1**
(45) Veröffentlichungstag und Bekanntmachung des Hinweises auf die Patenterteilung: **10.11.2021**
(21) Anmeldenummer: 19193051.0
(22) Anmeldetag: 22.08.2019
(51) Int. Cl.: B01D 11/02, C13B 10/12, C13B 10/10, C13B 10/08

(54) **VERFAHREN UND VORRICHTUNG ZUM AUFBEREITEN EINES GEMISCHES DAS ZUCKERRÜBENSCHNITZEL ALS EXTRAKTIONSGUT ENTHÄLT**
DEVICE AND METHOD FOR PREPARING A MIXTURE COMPRISING SUGAR BEET PULP AS EXTRACTION MATERIAL
PROCEDE ET DISPOSITIF DE PREPARATION D'UN MELANGE COMPRENANT DE LA PULPE DE BETTERAVE SUCRIERE COMME MATERIAU D'EXTRACTION

(30) Priorität: 23.08.2018 DE 102018120565
(43) Veröffentlichungstag der Anmeldung: 18.03.2020
(73) Patentinhaber: BMA Braunschweigische Maschinenbauanstalt AG, 38122 Braunschweig (DE)
(72) Erfinder: SCHULZE, Thomas, 38122 Braunschweig (DE); LEHNBERGER, Andreas, 38122 Braunschweig (DE); STEFFENS, Dirk, 38122 Braunschweig (DE); SPOORS, Reno, 38122 Braunschweig (DE)
(74) Vertreter: Gramm, Lins & Partner Patent- und Rechtsanwälte PartGmbB

(56) Entgegenhaltungen:
- EP-A1- 0 678 583
- EP-A1- 0 952 229
- DE-B- 1 048 263
- DE-B- 1 274 049
- DE-C- 947 060
- FR-A- 1 474 615
- FR-A1- 2 462 181

## Beschreibung

Die Erfindung betrifft ein Verfahren und eine Vorrichtung zum Aufbereiten eines Gemisches, das Zuckerrübenschnitzel als Extraktionsgut, einen Sandanteil und eine Extraktionslösung in Gestalt einer Zuckerlösung aufweist, mit einer Schnitzelmaische, die ein Maischabteil aufweist, wobei das Gemisch in dem Maischabteil bereitgestellt wird. Sand und/oder Feinkies werden von dem Gemisch in einer Absetzkammer getrennt, die an dem Maischabteil und/oder einer Rohrleitung, die von der Schnitzelmaische wegführt, angeordnet ist. Die Absetzkammer ist von dem Maischabteil und/oder der Rohrleitung vorzugsweise über eine Rückhalteeinrichtung, z.B. ein Rost, ein Sieb oder ein Gitter, getrennt, um zumindest einen Teil des Extraktionsgutes an einem Eindringen in die Absetzkammer zu hindern.

Die US 2 903 407 A betrifft eine Vorrichtung und ein Verfahren zum Waschen von Teersand, bei dem unter anderem in eine Absetzkammer über einen Verteiler ein ein Lösungsmittel enthaltendes Fluid der Absetzkammer zugeführt und eine Strömung in Richtung auf das Absetzbecken erzeugt wird. Der Teer wird aus dem Sand ausgewaschen, schwimmt auf und wird an der Oberfläche aus dem Gemisch entfernt.

Die US 6,250,473 B1 betrifft ein Verfahren und eine Vorrichtung zum Trennen von Partikeln mit unterschiedlichen Sinkraten oder Absetzraten, insbesondere die Trennung von Flugasche und Gips als nachgeschaltetes Verfahren bei der Rauchgasentschwefelung oder die Trennung von Ton und Schotter. Die Vorrichtung sieht einen im Wesentlichen zylindrischen, vertikal orientierten Tank mit einem an der Zylinderwand angebrachten, umlaufenden Hohlring mit einer Wassereinlasskammer vor, die Öffnungen radial nach innen und nach oben aufweist. An dem Boden des Zylinders sind ein Wassereinlass, ein Abfluss und ein Unterströmungsauslass angeordnet. Über einen oberen Ablauf werden Wasser und aufschwimmende Partikel abgeführt, über den Abfluss und den Unterströmungsauslass werden die Partikel mit einer größeren Absinkrate ausgetragen.

Die DE 199 09 353 A1 betrifft ein Verfahren und eine Vorrichtung zur Aufbereitung eines Strukturanteile und Organik enthaltenen Stoffgemisches in einem Reaktor, das mit Prozessluft und/oder einer Auswaschflüssigkeit einem aeroben Aufschluss oder einer aeroben Trocknung unterzogen wird, sodass die löslichen organischen Bestandteile abgeführt werden. Unterhalb eines Reaktionsraumes, der durch einen Siebboden begrenzt ist, ist ein Sammler angeordnet, der einen Luftanschluss und einen Auswaschflüssigkeitsaustritt aufweist.

Die DE 196 02 489 A1 betrifft ein Verfahren und eine Vorrichtung zur biologischen Behandlung von organischen Materialien mit einem Reaktor, der in seinem unteren Bereich mehrere, nebeneinanderliegende Kammern aufweist, die mittels eines Abdecksiebes gegenüber einem Innenraum des Reaktors abgetrennt sind. Die Kammern dienen zur Beaufschlagung des im Reaktor befindlichen Materials, und eine Kammer kann zur Rückspülung und Beflutung des Reaktorinnenraums mit einer Auswaschflüssigkeit beaufschlagt werden. Die aus den Kammern abgeführte Auswaschflüssigkeit wird über einen Störstoffabscheider, eine anaerobe Reaktorstufe und einen aeroben Reinigungsreaktor aufbereitet.

Die DE 947 060 B betrifft eine Schnitzelmaische mit einem Trog, dessen Wandung teilweise durch ein Sieb gebildet ist. Der Schnitzelmaische ist ein Steinfänger zugeordnet.

Zur Extraktion von Zucker aus Zuckerrübenschnitzeln oder Zuckerrohrstücken als Extraktionsgut werden beispielsweise kontinuierlich arbeitende Extraktionsanlagen eingesetzt, bei denen gewaschene und zu Zuckerrübenschnitzeln zerkleinerte Zuckerrüben oder zerkleinertes Zuckerrohr verarbeitet werden. Dabei wird in einer Fest-Flüssig-Extraktion den Zellen der Zuckerrübenschnitzel die darin enthaltene Saccharose mit Wasser als Extraktionsflüssigkeit entzogen. Da die Zellwände für Saccharose-Moleküle undurchlässig sind, müssen die Zellwände vor der eigentlichen Extraktion denaturiert werden. Ein Teil der Zellwände wird bereits beim Zerschneiden der Rüben mechanisch zerstört, der Hauptteil der Denaturierung findet jedoch erst durch thermische Einwirkung statt. Die großtechnischen Anlagen zur Extraktion von Zucker weisen zwei Hauptkomponenten für unterschiedliche verfahrenstechnische Aufgaben auf, nämlich eine Schnitzelmaische, die für den thermischen Zellaufschluss, den Wärmeaustausch zwischen eintretenden Schnitzeln und austretendem Saft sowie die Entschäumung eingesetzt wird, sowie einen Extraktionsapparat für die Fest-Flüssig-Extraktion der Saccharose aus den Schnitzelzellen durch Anwendung des Gegenstromprinzips. Die Schnitzelmaische und der Extraktionsapparat sind über Rohrleitungen und spezielle Pumpen miteinander verbunden. Die gewaschenen und geschnittenen Rüben werden über einen Einfüllschacht in die Schnitzelmaische eingebracht. Hier werden die Schnitzel mit Saft aus dem Extraktionsapparat angewärmt und für den Austritt der Zuckermoleküle durchlässig gemacht. Das in der Schnitzelmaische gebildete Gemisch aus Zuckerrübenschnitzeln und Saft oder Extraktionslösung wird mit Schnitzelpumpen in den Extraktionsapparat gepumpt, in dem die Schnitzel mit Hilfe von Transportflügeln nach oben transportiert werden. Bei diesem Transport findet die Extraktion der Zuckermoleküle aus den Rübenzellen statt. Aus dem Extraktionsapparat wird ein Zuckersaft abgezogen und fließt nach dem Passieren eines Sandabscheiders zu der Schnitzelmaische. Ein Teil des Zuckersaftes dient dazu, ein pumpfähiges Gemisch aus den Zuckerrübenschnitzeln herzustellen, ein anderer Teil durchströmt einen Wärmetauscher in der Schnitzelmaische und gibt einen großen Teil der enthaltenen Wärme an die frischen Zuckerrübenschnitzel ab. Entsprechend werden für die Inulingewinnung Zichorien als Extraktionsgut verarbeitet.

Die Schnitzelmaische weist ein Maischabteil auf und kann auch ein Wärmetauschabteil aufweisen. In dem Maischabteil werden die Zuckerrübenschnitzel aufgelockert, die Anwärmung vervollständigt und ein pumpfähiges Gemisch aus Zuckerrübenschnitzeln und Zuckersaft hergestellt, das zu dem Extraktionsapparat gepumpt werden kann. Eine solche Schnitzelmaische, die im Gegenstrom betrieben wird, ist aus der DE 1 274 049 A bekannt. Nahe dem Austragende der Schnitzelmaische sind an einem unteren Teil eines Trogkörpers Absetzkammern angeordnet, die über Siebe von dem eigentlichen Behandlungsraum getrennt sind. In den Absetzkammern werden Sand und/oder Feinkies und ähnliche Fremdkörper aufgenommen. Der abgesetzte Sand und/oder Feinkies kann zeitweilig mit Hilfe von Flüssigkeit entfernt werden.

Das Entfernen von Sand und/oder Feinkies aus der Absetzkammer erfolgt diskontinuierlich, so dass beim Entfernen des Sandes und/oder Feinkieses der Trogkörper geöffnet werden muss, um Sand und/oder Feinkies und Flüssigkeit aus der Schnitzelmaische abzulassen. Es ist schwierig festzustellen, wann die Absetzkammer geleert werden muss. Darüber hinaus besteht die Möglichkeit, dass das Extraktionsgut, Z.B. Zuckerrübenschnitzel und Extraktionslösung als Flüssigkeit dem weiteren Verarbeitungsprozess entzogen werden, wenn sich Zuckerrübenschnitzel oder Teile des Extraktionsgutes in der Absetzkammer absetzen.

Aufgabe der vorliegenden Erfindung ist es daher, ein Verfahren und eine Vorrichtung bereitzustellen, mit denen das Gemisch aus Zuckerrübenschnitzeln und Extraktionslösung effizient aufbereitet werden kann, um den Wirkungsgrad bei, der Zuckerextraktion insgesamt zu erhöhen.

Erfindungsgemäß wird diese Aufgabe durch ein Verfahren mit den Merkmalen des Hauptanspruches und eine Schnitzelmaische mit den Merkmalen des nebengeordneten Anspruchs gelöst. Vorteilhafte Ausgestaltungen und Weiterbildungen der Erfindung sind in den jeweiligen Unteransprüchen, der Beschreibung sowie den Figuren offenbart.

Das Verfahren zum Aufbereiten eines Gemisches, das Zuckerrübenschnitzel als ein Extraktionsgut, einen Sandanteil und eine Extraktionslösung in Gestalt einer Zuckerlösung aufweist, insbesondere eines Gemisches, das aus Zuckerrübenschnitzeln, einem Sandanteil und einer Zuckerlösung besteht, sieht zunächst das Bereitstellen eines Gemisches in einem Maischabteil einer Schnitzelmaische und das Trennen von Sand und/oder Feinkies aus dem Gemisch in zumindest einer Absetzkammer vor, die an dem Maischabteil und/oder einer Rohrleitung, die von der Schnitzelmaische wegführt, angeordnet ist. Dabei wird zum Trennen des Sandes und/oder Feinkieses von dem Extraktionsgut aufbereitete Extraktionslösung enthaltendes Prozessfluid der Absetzkammer durch einen Zuführanschluss an der Absetzkammer und eine damit gekoppelte Zuführeinrichtung zugeführt und dadurch eine Strömung in Richtung auf das Maischabteil und/oder die Rohrleitung erzeugt, wobei die Absetzkammer von dem Maischabteil und/oder der Rohrleitung über eine Rückhalteeinrichtung getrennt ist, um zumindest einen Teil des Extraktionsgutes an einem Eindringen in die Absetzkammer zu hindern. Die Schnitzelmaische, insbesondere eine Gegenstrom-Schnitzelmaische mit einem dem Maischabteil vorgeschalteten Wärmetauscherabteil, durchmischt und erwärmt das Extraktionsgut und die Extraktionslösung. Trotz einer sorgfältigen Vorreinigung mit Wasser ist nicht zu verhindern, dass ein Sandanteil an den Zuckerrübenschnitzeln haftet. Der Sandanteil stört bei der weiteren Verarbeitung, unter anderem, da er abrasiv wirkt. In der Schnitzelmaische wird das Gemisch über Rührelemente und Fördereinrichtungen intensiv bewegt. Dadurch kommt es bei einem hohen Sandanteil zu einem hohen Abrieb innerhalb der Schnitzelmaische. Wird das Gemisch mit einem hohen Sandanteil durch einen Auslassstutzen zu dem Extraktionsapparat transportiert, treten abrasive Wirkungen in der Pumpe, den Leitungen und in dem Extraktionsapparat selbst auf. Darüber hinaus verringert ein hoher Sandanteil den Wirkungsgrad der Gesamtanlage, da Sand und/oder Feinkies durch Zusetzen der Siebe die Gesamtleistung in dem Extraktionsapparat verringern kann. Werden diskontinuierlich Sand und/oder Feinkies aus den Absetzkammern herausgespült, geht Extraktionslösung als Prozessfluid mit verloren. Darüber hinaus können aus Teilen des Extraktionsguts entstandene Feinteile, sogenannte Pulpe, und Teile des Extraktionsgutes wie Zuckerrübenschnitzel durch die Rückhalteeinrichtung zwischen der Absetzkammer und dem Schnitzelmaischetrog gelangen, so dass zusammen mit dem Sand und/oder Feinkies und der Extraktionslösung Extraktionsgut aus dem Prozess herausgeschleust werden. Durch Zuführen von Prozessfluid, z.B. durch eine aus der Schnitzelmaische in die Absetzkammer führende Leitung oder eine von außen in die Absetzkammer führende Zuführöffnung, ist es möglich, Sand und/oder Feinkies von dem Extraktionsgut effektiv zu trennen. Sand und/oder Feinkies und Extraktionsgut bzw. Pulpe haben unterschiedliche spezifische Gewichte, so dass durch Zuführen von Prozessfluid, beispielsweise Extraktionslösung aus dem weiteren Extraktionsverfahren oder aus einem separaten Tank oder auch nur von Wasser, im Rahmen eines Sedimentationsverfahrens Sand und/oder Feinkies von dem Extraktionsgut in dem Gemisch getrennt werden kann. Der Sand und/oder Feinkies oder zumindest ein Sand- und/oder Feinkiesanteil setzen sich in der Absetzkammer ab, ohne dass Extraktionsgut und Pulpe dem Prozess entzogen werden. Die Zufuhr von Prozessfluid in die Absetzkammer kann durch eine innerhalb der Schnitzelmaische oder innerhalb des Maischabteils geführte Leitung oder ein Rohr erfolgen, wobei das Ende der Leitung oder des Rohres in der Absetzkammer endet. Alternativ oder ergänzend ist in der Wand der Absetzkammer zumindest ein Zuführanschluss oder zumindest eine Zuführöffnung angeordnet oder ausgebildet, durch den oder die das Prozessfluid in die Absetzkammer geleitet wird. Das Prozessfluid beinhaltet bevorzugt kein oder nur einen reduzierten Sand- und/oder Feinkiesanteil, um die Extraktion nicht zu belasten. Das Prozessfluid ist bevorzugt eine aus dem Extraktionsprozess stammende, ggf. aufbereitete Flüssigkeit, die einen zumindest verringerten Sand- und/oder Feinkiesanteil und/oder Pulpeanteil und/oder Extraktionsgutanteil aufweisen kann. Es können mehrere Absetzkammern vorgesehen sein, beispielsweise eine an dem Maischabteil und zumindest eine weitere in einer Rohrleitung, die von dem Maischabteil zu einer Weiterverarbeitungseinrichtung, zum Beispiel einem Extraktionsapparat oder -turm, führt.

Vorteilhafterweise wird das zugeführte Prozessfluid in Richtung auf das Maischabteil und/oder der Rohrleitung der jeweiligen Absetzkammer zugeführt, so dass eine Strömungsbewegung von der Absetzkammer in das Maischabteil und/oder die Rohrleitung erzeugt wird. Die Strömungsgeschwindigkeit durch die Rückhalteeinrichtung ist dabei so gewählt, dass Sand und/oder Feinkies absinken und in die Absetzkammer gelangt, Zuckerrübenschnitzel jedoch die Rückhalteinrichtung, beispielsweise ein Sieb oder ein Rost oder ein Gitter, nicht durchdringen oder nur zu einem geringen Anteil durchdringen. In der Schnitzelmaische und/oder Rohrleitung sedimentieren Sand und/oder Feinkies. Die Absetzkammer, die nach dem Sedimentationsprinzip im Gegenstrom arbeitet, ist daher in dem unteren Teil oder Bodenbereich des Maischabteils und/oder der Rohrleitung aus der Schnitzelmaische positioniert. Die Absetzkammer steht in strömungstechnischer Verbindung zu dem Maischabteil und/oder der Rohrleitung und ermöglicht das Hindurchtreten sowohl von Extraktionslösung oder Prozessfluid aus der Absetzkammer und die Rückhalteeinrichtung in das Maischabteil und/oder die Rohrleitung als auch von Sand und/oder Feinkies aus dem Maischabteil und/oder die Rohrleitung durch die Rückhalteeinrichtung in die Absetzkammer. Ohne eine Gegenströmung würde auch Extraktionsgut, das durch die Rückhalteeinrichtung wie den Rost oder das Gitter gelangen, in der Absetzkammer aufgefangen werden.

Bevorzugt weist das zugeführte Prozessfluid eine minimale Strömungsgeschwindigkeit von 0,02 m/s durch Öffnungen in der Rückhalteeinrichtung in Richtung auf das Maischabteil auf, mit der das Prozessfluid von der Absetzkammer in das Maischabteil und/oder die Rohrleitung geleitet wird. Diese sehr geringe Strömungsgeschwindigkeit ermöglicht einerseits das Absetzen der kleinen Sandpartikel, die eine höhere Dichte als das Extraktionsgut oder die Zuckerrübenschnitzel und das Prozessfluid oder die Extraktionslösung aufweisen, verhindert andererseits ein Eindringen von Pulpe und/oder Extraktionslösung und Extraktionsgut in die Absetzkammer.

Neben der minimalen Strömungsgeschwindigkeit kann das Sinkverhalten und Schwimmverhalten der Feststoffkomponenten des Gemisches, also Sand und/oder Feinkies und Extraktionsgut, über die Dichte des Prozessfluids beeinflusst werden. Die Dichte kann durch Aufkonzentration von z.B. Zucker in dem Prozessfluid besonders einfach erhöht werden. Wird ein Prozessfluid mit einer geringeren Dichte gewünscht, wird Frischwasser oder ein Prozessfluid mit einer geringeren Dichte zugeführt. Je geringer die Dichte des Prozessfluids ist, desto leichter sinken die Sandpartikel und das Extraktionsgut ab, je höher die Dichte eingestellt wird, desto leichter schwimmt das Extraktionsgut auf. Die Dichte des Prozessfluids ist dabei bevorzugt so eingestellt, dass die Sandpartikel weiter absinken.

Als Prozessfluid kann eine Extraktionslösung aus einem der Schnitzelmaische nachgeordneten Extraktionsapparat oder einem Sandabscheider, beispielsweise einem außerhalb der Schnitzelmaische angeordneten Sandabscheider verwendet werden. Weiterhin kann alternativ das zuvor beschriebene Prozessfluid auch aus einem nicht näher erläuterten Zirkulationskreislauf der Schnitzelmaische, zum Beispiel zur Entlüftung, Entschäumung und/oder Anwärmung der Schnitzelmaische, entnommen werden. Ein gesonderter, z.B. externer Sandabscheider liegt dann vor, wenn nicht mehr das in dem Maischabteil befindliche Gemisch einer Sandabscheidebehandlung unterzogen wird, sondern wenn eine um zumindest einen Teil des Extraktionsgutes reduzierte Extraktionslösung um zumindest einen Teil des darin befindlichen Sandes und/oder Feinkieses reduziert wird. Der Sandabscheider kann örtlich an der Schnitzelmaische oder an dem Gehäuse der Schnitzelmaische angeordnet oder ausgebildet sein, kann aber auch als externe Baugruppe ausgebildet sein.

In einer Weiterbildung der Erfindung ist es vorgesehen, dass Sand und/oder Feinkies und Prozessfluid, beispielsweise Extraktionslösung oder aufbereitete Extraktionslösung, aus der Absetzkammer abgeführt werden, wobei das Abführen aus der Prozesskammer bevorzugt kontinuierlich, beispielsweise durch einen Pumpvorgang erfolgt. Aus der Absetzkammer werden Sand und/oder Feinkies und Prozessfluid einem nachgeordneten Sandabscheider zugeführt, in dem Sand und/oder Feinkies von dem Prozessfluid getrennt oder abgetrennt werden. Von dem nachgeordneten Sandabscheider wird Prozessfluid der Schnitzelmaische, insbesondere dem Maischabteil und/oder der Absetzkammer zugeführt, Sand und/oder Feinkies werden aus dem Sandabscheider ausgeschleust und abtransportiert. Dadurch ist es möglich, einerseits einen kontinuierlichen Abtransport von Sand und/oder Feinkies aus der Schnitzelmaische und andererseits eine vollständige Rückgewinnung und Wiederzuführung von Prozessfluid zu erreichen. Dies erhöht die Effizienz der Aufbereitung des Gemisches zur Gewinnung von Zucker oder dergleichen.

In dem der Schnitzelmaische nachgeordneten Sandabscheider können Sand und/oder Feinkies sedimentiert und kontinuierlich aus dem Prozessfluid abgeführt werden, beispielsweise über eine kontinuierlich arbeitende Fördereinrichtung wie z. B. eine Schnecke, einem Förderband oder ähnliches.

Die Schnitzelmaische zum Aufbereiten eines Gemisches, das Zuckerrübenschnitzel als Extraktionsgut, einen Sandanteil und eine Extraktionslösung in Gestalt einer Zuckerlösung aufweist, mit einem Maischabteil für das Gemisch, mit zumindest einer Absetzkammer für Sand und/oder Feinkies an dem Maischabteil und/oder einer Rohrleitung und einer Rückhalteeinrichtung, z.B. einem Rost, einem Sieb oder einem Gitter, die zwischen dem Maischabteil und/oder der Rohrleitung und der Absetzkammer angeordnet ist, um zumindest einen Teil des Extraktionsgutes an einem Eindringen in die zumindest eine Absetzkammer zu hindern, sieht vor, dass an der zumindest einen Absetzkammer ein Zuführanschluss mit einer damit gekoppelten Zuführeinrichtung zum Zuführen von aufbereitete Extraktionslösung enthaltendes Prozessfluid in die zumindest eine Absetzkammer angeordnet ist. Wird nachfolgend von einer Absetzkammer gesprochen, sind darunter auch mehr als eine Absetzkammer zu verstehen, die Absetzkammern können an dem Maischabteil und/oder an einer Rohrleitung, die von einer Schnitzelmaische wegführt, ausgebildet oder angeordnet sein. Durch den Zuführanschluss ist es möglich, über eine Zuführeinrichtung, insbesondere über eine Pumpe oder über ein hydrostatisches Zuführverfahren, Prozessfluid in die Absetzkammer zu leiten, um bei der Sedimentation von Sand und/oder Feinkies in der Absetzkammer zu verhindern, dass Pulpe und Extraktionsgut in die Absetzkammer gelangen und damit aus dem weiteren Verarbeitungsprozess entfernt werden. Insbesondere wenn das Prozessfluid von außen in einem Kreislauf geführt wird, ergeben sich keine Verluste und die Extraktion kann einfach und effizient erfolgen. Der Zuführanschluss kann an einer Wand der Absetzkammer oder als eine in die Absetzkammer führende Leitung ausgebildet sein, die an der Rückhalteeinrichtung angeschlossen ist oder durch die Rückhalteeinrichtung in die Absetzkammer hineinragt. Die Leitung kann von außen an die Schnitzelmaische, die Rohrleitung und Absetzkammer herangeführt sein oder innerhalb der Schnitzelmaische zu der Absetzkammer führen.

Die Rückhalteeinrichtung kann Spalt- oder Ausnehmungsweiten im Bereich zwischen 1 mm und 10 mm aufweisen, um die zerkleinertes Extraktionsgut in den üblichen Größen davon abzuhalten, in die Absetzkammer zu gelangen. Durch die Spalte oder Ausnehmungen in der Rückhalteeinrichtung, z.B. einem Rost, kann eine Gegenströmung von der Absetzkammer in das Maischabteil und/oder die Rohrleitung erfolgen. Für den Fall, dass in der Rückhalteeinrichtung Spalte ausgebildet sind, betragen die Spaltlängen bevorzugt ein Vielfaches der Spaltweite oder Spaltweiten, beispielsweise zwischen dem 5-fachen und 50-fachen der jeweiligen Spaltweite. Über eine Ausgestaltung der Rückhalteeinrichtung mit Spalten, die eine Spaltlänge wesentlich größer als die jeweilige Spaltweite aufweist, kann insbesondere bei langgestreckten Extraktionsgütern wie Rübenschnitzel eine überraschend gute Trennung von Fluidanteilen und Sand und/oder Feinkies erfolgen.

Ein Sandabscheider, bevorzugt ein externer Sandabscheider, ist in einer Weiterbildung der Erfindung über eine Rückführeinrichtung zum Rückführen von Prozessfluid mit der Schnitzelmaische gekoppelt. Die Rückführeinrichtung kann insbesondere eine Pumpe aufweisen und über ein oder mehrere Leitungen mit der Schnitzelmaische in strömungstechnischer Verbindung stehen. Die Rückführeinrichtung kann mit dem Maischabteil und/oder dem Zuführanschluss gekoppelt sein, so dass Prozessfluid aus dem Sandabscheider dem Maischabteil, beispielsweise durch einen separaten Stutzen, oder durch den Zuführanschluss an der Absetzkammer an dem Maischabteil und/oder der Rohrleitung zugeführt werden kann.

Die Rückführeinrichtung kann eine Rückführpumpe, insbesondere eine Kreiselpumpe aufweisen, um das Prozessfluid, das bevorzugt vollständig von dem Sandanteil befreit ist, von dem Sandabscheider zur Schnitzelmaische und/oder de Rohrleitung zu transportieren.

Der Sandabscheider kann mit der Absetzkammer über eine Verbindungsleitung gekoppelt sein. Die Verbindungsleitung ist in einer Ausführungsform der Erfindung mit einem Auslassanschluss an der Absetzkammer verbunden, wobei der Auslassanschluss bevorzugt an dem tiefsten Punkt Absatzkammer angeordnet ist, um den Austritt von Sand und/oder Feinkies aus der Absetzkammer zu erleichtern. An dem Auslassanschluss kann eine kontinuierlich oder diskontinuierlich arbeitende Austragseinrichtung angeordnet sein, beispielsweise eine Pumpe oder eine Zellenradschleuse. Der Sand, zusammen mit einem Extraktionslösungsanteil, kann über eine in der Verbindungsleitung angeordnete Pumpe dem Sandabscheider zugeführt werden.

Der Sandabscheider weist bevorzugt eine Fördereinrichtung auf, die Sand und/oder Feinkies aus dem Prozessfluid abtransportieren, bevorzugt ist die Fördereinrichtung als eine kontinuierliche Fördereinrichtung wie eine Förderschnecke oder ein Förderband ausgebildet. In dem nachgeordneten Sandabscheider werden Sand und/oder Feinkies von dem Prozessfluid bevorzugt durch Sedimentation getrennt, andere Trenneinrichtungen und Trennverfahren sind ebenfalls möglich und vorgesehen.

Die Entfernung von Sand und/oder Feinkies aus dem aufzubereitenden Gemisch oder Extraktionsgut kann mit der Vorrichtung in einem kontinuierlichen Verfahren erfolgen, ohne dass Extraktionsgut dem Prozess entzogen wird. Prozessfluid wird nach dem Ausschleusen des Sandes und/oder Feinkieses wieder der Schnitzelmaische oder der Absetzkammer zugeführt, so dass ein Kreislauf entsteht, in dem die zu verarbeitenden Anteile beibehalten und die unerwünschten Anteile abgeführt werden.

Die Rückhalteeinrichtung kann eine freie Öffnungsfläche aufweisen, die abhängig von der Verarbeitungsleistung der Schnitzelmaische bei zunehmender Verarbeitungsleistung größer und bei abnehmender Verarbeitungsleistung kleiner gewählt ist. Beispielsweise beträgt die freie Öffnungsfläche der Rückhalteeinrichtung zwischen 0,3 m² und 1,5 m² bei einer Verarbeitungsleistung von 4.000t/Tag und 18.000 t/Tag, wobei bei einer minimalen Verarbeitungsleistung des Extraktionsgutes von 4.000 t/Tag eine geringe freie Öffnungsfläche von beispielsweise 0,3 m² gewählt wird, um möglichst wenig Extraktionsgut in die Absetzkammer gelangen zu lassen. Bei einer hohen Verarbeitungsleistung von beispielsweise 18.000 t/Tag wird eine vergrößerte freie Öffnungsfläche eingesetzt, um ein Verstopfen der Rückhalteeinrichtung zu vermeiden. Die Rückhalteeinrichtung kann auswechselbar in der Schnitzelmaische eingebaut, beispielsweise eingelegt, eingeklemmt oder eingeschraubt sein. Alternativ ist die freie Öffnungsfläche der Rückhalteeinrichtung einstellbar, beispielsweise durch zueinander verschieblich oder verdrehbar in oder an der Schnitzelmaische gelagerte Roste, Siebe, Gitter oder dergleichen.

Das Verhältnis der freien Öffnungsfläche der Rückhalteeinrichtung zur Querschnittfläche eines Schnitzelmaischeabteil-Anschlusses weist einen Wert von 1 bis 5, bevorzugt von 3 auf. Dieses Verhältnis gilt für alle üblichen Verarbeitungsleistungen von Schnitzelmaischen, die in einem Bereich von 2.000 t/Tag bis 20.000 t/Tag liegen.

Nachfolgend werden Ausführungsbeispiele der Erfindung anhand der beigefügten Figuren näher erläutert. Es zeigen:
- Fig. 1: eine Seitansicht einer Zuckerrüben-Extraktionsanlage gemäß dem Stand der Technik,
- Fig. 2: einen Ausschnitt eines Leitungsschemas;
- Fig. 3: eine Querschnittsansicht eines Ausschnittes eines Maischabteils mit einer Absetzkammer;
- Fig. 4: eine Querschnittsansicht eines Ausschnittes einer Rohrleitung mit einer Absetzkammer; sowie
- Fig. 5: eine Variante des Leitungsschemas gemäß Fig. 3.

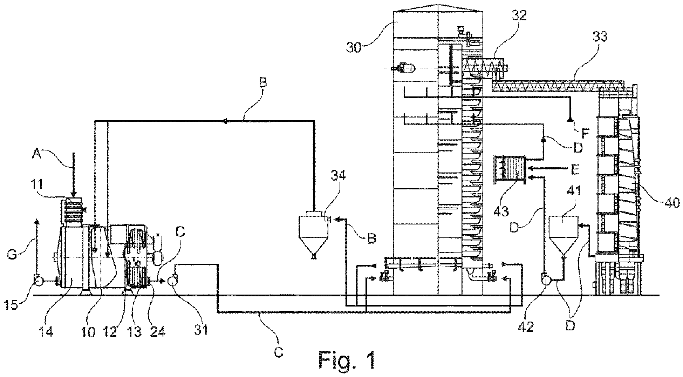

Figur 1 zeigt eine Seitansicht einer Zuckerrüben-Extraktionsanlage gemäß dem Stand der Technik, wobei teilweise Querschnitte durch einzelne Teile der Zuckerrüben-Extraktionsanlage zu sehen sind. Die Erfindung wird anhand der Zuckerextraktion erklärt, andere Extraktionsgüter als Zuckerrübenschnitzel können entsprechend eingesetzt werden, ggf. unter Verwendung anderer nachgelagerter Baugruppen oder Verfahrensschritte nach der Sand- und/oder Feinkiesentfernung. Die Zuckerrüben-Extraktionsanlage weist eine Schnitzelmaische 10, einen Extraktionsapparat 30 und eine Schnitzelpresse 40 auf, die über Leitungen miteinander und mit weiteren Vorrichtungen verbunden sind.

Gewaschene Zuckerrüben werden als geschnittene Zuckerrübenschnitzel über eine Einfüllleitung A, ein Förderband oder dergleichen, in einen Einfüllschacht 11 der Schnitzelmaische 10 eingebracht. Der Einfüllschacht 11 führt in ein Wärmetauschabteil 14 der Schnitzelmaische 10, von dem aus die Zuckerrübenschnitzel in ein Maischabteil 12 der Schnitzelmaische 10 mit darin befindlichen, rotierenden Rührelementen 13 transportiert werden, die für eine Durchmischung der Zuckerrübenschnitzel in einer zugeführten Extraktionslösung sorgen, so dass ein Gemisch aus Zuckerrübenschnitzeln und Extraktionslösung erhalten wird. Als Extraktionslösung wird dem Maischabteil 12 zuckerhaltiger Saft aus einem unteren Teil des Extraktionsapparates 30 über eine Saft-Leitung B, die wie alle anderen Leitungen aus einem oder mehreren Rohren und/oder Schläuchen bestehen kann, zugeführt. Das Gemisch aus Zuckerrübenschnitzeln und Extraktionslösung wird durch eine Gemisch-Leitung C mittels einer drehzahlregulierbaren Extraktionsapparat-Pumpe 31 in den unteren Teil des Extraktionsapparates 30 gepumpt.

Im Extraktionsapparat 30 werden die Zuckerrübenschnitzel mit Hilfe von Transportflügeln und Aufhaltern in dichter Packung gleichmäßig nach oben transportiert, wobei die Extraktion der Zuckermoleküle aus den Zuckerrübenzellen der Zuckerrübenschnitzel stattfindet. Die extrahierten Zuckerrübenschnitzel werden am oberen Ende des Turmes mit zwei Ausziehschnecken 32, 33 aus dem Extraktionsapparat 30 ausgetragen und in der nachgeschalteten Schnitzelpresse 40 mechanisch entwässert. Das hier anfallende, leicht zuckerhaltige Presswasser, eine Extraktionslösung, die aus einem oberen Teil des Extraktionsapparates 30 kommt, wird entlang einer Presswasser-Leitung D in einem Presswasserbehälter 41 gesammelt, durch eine Presswasserpumpe 42 zu einem Presswasser-Wärmer 43 geführt und dort nach Erwärmung mit Dampf E in den Extraktionsapparat 30 zurückgeführt.

In den Extraktionsapparat 30 wird neben Presswasser auch Frischwasser durch eine Frischwasser-Leitung F auf einem höheren Niveau als das Presswasser zugeführt, so dass sich aus dem zugeführten Frisch- und Presswasser eine Extraktionsflüssigkeit in dem Extraktionsapparat 30 bildet. Die Extraktionsflüssigkeit fließt im Gegenstrom zu den Zuckerrübenschnitzeln nach unten und reichert sich dabei aufgrund des stets vorherrschenden Konzentrationsgefälles mit Zucker an. Dabei entsteht der sog. Saft, der in dem unteren Teil des Extraktionsapparates 30 durch über den gesamten Umfang integrierte Seitensiebe abgezogen und über die Saft-Leitung B zu einem Sandabscheider 34 geführt wird, wo in dem Saft enthaltener Sand und/oder Feinkies abgeschieden werden. Der dabei erhaltene sandreduzierte, insbesondere sandbefreite Saft wird anschließend entlang der Saft-Leitung B der Schnitzelmaische 10 zugeführt.

Das Wärmetauschabteil 14 ist dem Maischabteil 12 in Transportrichtung der Zuckerrübenschnitzel vorgeschaltet. Der warme Saft aus dem Extraktionsapparat 30 wird sowohl in das Maischabteil 12 als auch in das Wärmetauschabteil 14 eingebracht. Der warme Saft gibt in dem Wärmetauschabteil 14 Wärme an die durch Einfüllleitung A zugeführten Zuckerrübenschnitzel ab, wodurch die Zuckerrübenschnitzel zum Austritt von Zuckermolekülen aus den Zuckerrübenschnitzeln durchlässig gemacht werden. Danach verlässt der Saft als kalter Rohsaft durch eine Rohsaft-Leitung G und eine Rohsaft-Pumpe 15 das Wärmetauschabteil 14 über in der Stirnwand der Schnitzelmaische 10 eingebaute Siebe zur weiteren Verarbeitung.

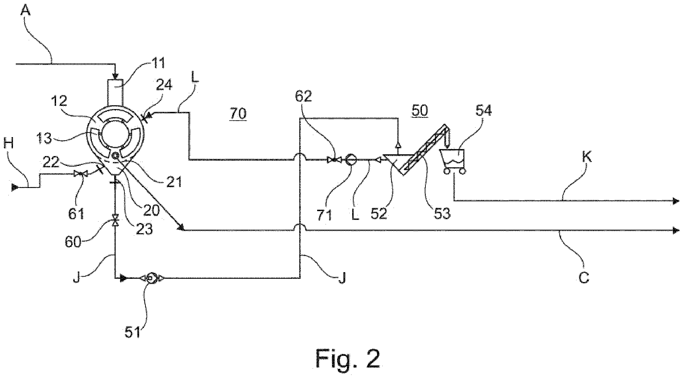

Figur 2 zeigt einen Ausschnitt eines Leitungsschemas mit einer Schnitzelmaische 10 nach einem Ausführungsbeispiel der Erfindung. Die Zuckerrübenschnitzel werden durch die Einfüllleitung A in den Einfüllschacht 11 der Schnitzelmaische 10 eingebracht und gelangen in das Maischabteil 12 der Schnitzelmaische 10. In dem Maischabteil 12 werden die Zuckerrübenschnitzel und die Extraktionslösung durch mehrere auf einer rotierenden Welle befestigte Rührelemente 13 durchmischt. An dem Maischabteil 12 ist bodenseitig eine Absetzkammer 20 angeordnet. Eine Rückhalteeinrichtung 21 in Gestalt eines Rostes, eines Siebes oder eines Gitters ist zwischen dem Maischabteil 12 und der Absetzkammer 20 angeordnet. Die Rückhalteeinrichtung oder der Rost 21 hindert zumindest einen Teil der Zuckerrübenschnitzel an einem Eindringen in die Absetzkammer 20, lässt jedoch Extraktionslösung und insbesondere Sand und/oder Feinkies hindurch. An der Absetzkammer 20 ist ein Zuführanschluss 22 angeordnet, der mit einer nicht dargestellten Zuführeinrichtung zum Zuführen von Prozessfluid von außen in die Absetzkammer 20 durch eine Zuführleitung H gekoppelt ist. In der Zuführleitung H ist ein Absperrventil 61 angeordnet. Das Gemisch aus Zuckerrübenschnitzeln und Extraktionslösung wird durch die Gemisch-Leitung C aus dem Maischabteil 12 über die nur in der Figur 1 dargestellte Extraktionsapparat-Pumpe 31 zu dem Extraktionsapparat 30 abgeführt.

Die Absetzkammer 20 ist über eine Auslassöffnung 23 und eine daran angeschlossene Sandabscheider-Leitung J, in der eine Sandabscheider-Pumpe 51 angeordnet ist, mit einem externen Sandabscheider 50 verbunden. In der Sandabscheider-Leitung J ist zwischen der Absetzkammer 20 und der Sandabscheider-Pumpe 51 ein Absperrschieber 60 angeordnet, um die Sandabscheider-Leitung J nach Bedarf zu öffnen und zu schließen. Die Sandabscheider-Pumpe 51, die vorliegend als Verdrängerpumpe ausgebildet ist, ist dazu eingerichtet, Sand und/oder Feinkies und Extraktionslösung aus der Absetzkammer 20 zu dem externen Sandabscheider 50 zu fördern.

Der externe Sandabscheider 50 weist vorliegend einen Trichter 52 zur Sedimentationsabscheidung und einen Schneckenförderer 53 zum Abtransport des Sediments in einen Wagen 54 auf. Der Wagen 54 kann auch als ein Behältnis ausgebildet sein.

Der externe Sandabscheider 50 ist vorliegend als eine externe Baugruppe ausgebildet, was aber nicht notwendig ist. Alternativ kann der externe Sandabscheider 50 auch unmittelbar an oder in der Absetzkammer 20 ausgebildet sein. Der in dem Wagen 54 gesammelte Sand und/oder Feinkies wird über Transportweg K zur Entsorgung oder Weiterverwendung für andere Zwecke als zur Zuckerherstellung abtransportiert. Mögliche alternative Ausführungsformen des externen Sandabscheiders 50 sind ein Zyklonabscheider oder ein Rechenklassierer.

Der externe Sandabscheider 50 ist mittels einer Rückführeinrichtung 70 zum Rückführen von Prozessfluid mit der Schnitzelmaische 10 gekoppelt. Dazu ist der Trichter 52 mittels einer Rückführpumpe 71, z.B. eine Kreiselpumpe, der Rückführeinrichtung 70 und einem Absperrventil 62 mit einem Maischabteil-Anschluss 24 des Maischabteils 12 über eine Rückführ-Leitung L verbunden. Die Rückführeinrichtung 70 kann einen nicht dargestellten Strömungswächter aufweisen, der zwischen der Rückführpumpe 71 und dem Trichter 52 angeordnet ist. Der Strömungswächter schaltet die Rückführpumpe 51 abhängig vom Füllstand des Trichters 52 ein und aus, um ein Trockenlaufen der Rückführpumpe 51 zu vermeiden. Durch die Rückführeinrichtung 70 kann die in dem externen Sandabscheider 50 gewonnene sandreduzierte, insbesondere sandbefreite Extraktionslösung wiederverwendet werden, indem diese zur Herstellung des Gemisches aus Extraktionslösung und Zuckerrübenschnitzeln genutzt wird. Alternativ oder zusätzlich kann die sandreduzierte Extraktionslösung aus dem externen Sandabscheider 50 nach vorheriger Erwärmung dem Wärmetauschabteil 14 der Schnitzelmaische 10 zugeführt werden. Alternativ oder zusätzlich kann die Rückführpumpe 71 Extraktionslösung in die Absetzkammer 20 pumpen. Beispielsweise kann die Rückführpumpe 71 zu dem Zuführanschluss 22 führen, so dass die sandreduzierte Extraktionslösung aus dem externen Sandabscheider 50 als Prozessfluid zum Trennen des Sandes und/oder Feinkieses von den Zuckerrübenschnitzeln dient. Alternativ oder zusätzlich ist es möglich, die Zuführung der in dem externen Sandabscheider 50 gewonnenen sandreduzierten, insbesondere sandbefreiten Extraktionslösung zu dem Extraktionsapparat 30 oder einer Vorrichtung, die dem Extraktionsapparat 30 vor- und/oder nachgeschaltet ist, vorzunehmen.

Das Prozessfluid wird in diesem Ausführungsbeispiel als vorzugsweise entschäumte Extraktionslösung der Schnitzelmaische 10 zugeführt. Dazu kann die Extraktionslösung vorher einen Entschäumer durchlaufen. Als Prozessfluid kann zusätzlich oder alternativ auch die aus dem externen Sandabscheider 50 gewonnene sandreduzierte, insbesondere sandbefreite Extraktionslösung und/oder Saft aus dem Extraktionsapparat 30 dienen. Alternativ oder zusätzlich können Frischwasser, Presswasser und/oder Rohsaft als Prozessfluid verwendet werden. Möglich ist auch die separate Herstellung von Extraktionslösung für den Zweck der Nutzung als Prozessfluid, die beispielsweise in einem separaten Tank gelagert werden kann.

Vorliegend ist nur ein Zuführanschluss 22 in die Absetzkammer 20 hinein gezeigt. Möglich ist aber auch, dass mehr als ein Zuführanschluss 22 für die Zuführung von Prozessfluid in die Absetzkammer 20 führt. Beispielsweise kann die Absetzkammer 20 eckig, insbesondere viereckig in Gestalt einer Pyramide, ausgebildet sein. Dann kann an jeder die Mantelfläche der Pyramidenform bildenden Seite der Absetzkammer 20 ein Zuführanschluss 22 angeordnet sein, um ein von allen Seiten gleichmäßiges Zuführen von Prozessfluid in die Absetzkammer 20 und damit eine gleichmäßig Anströmung des Prozessfluides in die Absetzkammer 20 zu gewährleisten. Alternativ oder ergänzend kann Prozessfluid über eine oder mehrere Leitungen aus dem Maischabteil an oder durch die Rückhalteeinrichtung 21 in die Absetzkammer 20 führen, beispielsweise einige Zentimeter in die Absetzkammer 20 hineinragen, um Prozessfluid unabhängig von dem aus dem Maischabteil 12 stammenden Gemisch aus Extraktionslösung und Pulpe und/oder Extraktionsgut einzuleiten und eine geringe Gegenströmung in Richtung auf das Maischabteil 12 erzeugen zu können. Dadurch bleibt die Sedimentation zu der und in der Absetzkammer 20 weiter möglich, jedoch ohne dass Extraktionsgut und/oder Pulpe bei einer kontinuierlichen Abführung von Sand und/oder Feinkies aus der Absetzkammer 20 ausgeschleust werden. Das Verhältnis der freien Öffnungsfläche der Rückhalteeinrichtung 21 zu der Querschnittsfläche des Schnitzelmaischeabteil-Anschluss 24 weist einen Wert von 1 bis 5, bevorzugt von 3 auf. Dieses Verhältnis gilt für alle üblichen Verarbeitungsleistungen von Schnitzelmaischen 10, die in einem Bereich von 2.000 t/Tag bis 20.000 t/Tag liegen.

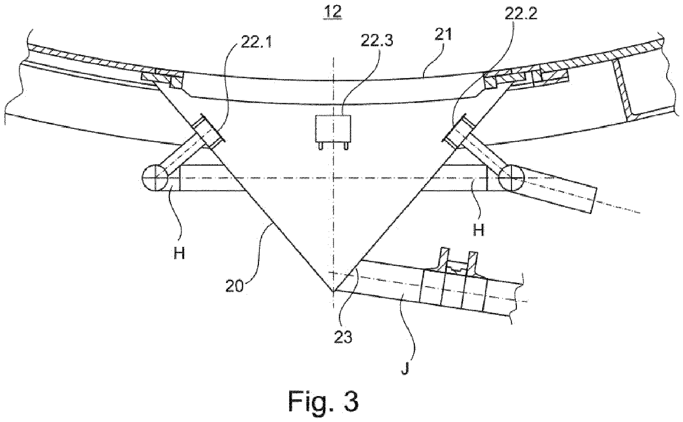

Figur 3 zeigt eine Querschnittsansicht eines Ausschnittes eines Maischabteils 12 mit einer pyramidenförmigen Absetzkammer 20 nach einem Ausführungsbeispiel der erfindungsgemäßen Schnitzelmaische 10. Die Absetzkammer 20 weist insgesamt vier Zuführanschlüsse 22 für das Prozessfluid auf, wovon die drei Zuführanschlüsse 22.1, 22.2, 22.3 in dieser Darstellung sichtbar sind. Die Zuführleitung H ist, wie anhand der Zuführanschlüsse 22.1, 22.2 sichtbar ebenso wie bei Zuführanschluss 22.3 und dem nicht sichtbaren vierten Zuführanschluss, in Richtung auf das Rost 21 bzw. das Maischabteil 12 hin orientiert an der Absetzkammer 20 angeordnet. Die Absetzkammer 20 ist an einem im Ausschnitt dargestellten Umfang einer Zylinderwand des Maischabteils 12 angeordnet. Zwischen Maischabteil 12 und Absetzkammer 20 ist der Rost 21 angeordnet. Der Sand und/oder Feinkies in dem oberhalb des Rostes in dem Maischabteil 12 befindlichen Gemisch gelangt durch den Rost 21, setzt sich in der Absetzkammer 20 ab und gelangt mit der Extraktionslösung durch die an der Auslassöffnung 23 der Absetzkammer 20 angeordneten Sandabscheider-Leitung J zu dem in dieser Figur nicht dargestellten externen Sandabscheider 50. Die Auslassöffnung 23 befindet sich dort, wo die Absetzkammer 20 trichterförmig zusammenläuft. Dies ist, wie in Figur 3 gezeigt, vorliegend zugleich der tiefste Punkt der Absetzkammer 20. Dies gewährleistet eine vollständige Abführung des abgesetzten Sandes und/oder Feinkieses durch die Sandabscheider-Leitung J.

Durch die Zuführanschlüsse 22 wird Prozessfluid von außen der Absetzkammer 20 zugeführt, um Sand und/oder Feinkies von den Zuckerrübenschnitzeln effektiv zu trennen. Zuckerrübenschnitzel und Pulpe werden durch den Rost 21 und das in Richtung auf das Maischabteil 12 zugeführte Prozessfluid in dem Maischabteil 12 zurückgehalten und können nicht in die Absetzkammer 20 gelangen. Dafür sorgen einerseits die unterschiedlichen spezifischen Gewichte von Zuckerrübenschnitzeln, Pulpe und Sand und/oder Feinkies und andererseits die erzeugte Strömungsbewegung des Gemisches von der Absetzkammer 20 in das Maischabteil 12 hinein. Im Resultat setzen sich nur Sand und/oder Feinkies oder ein Sand- und/oder Feinkiesanteil in der Absetzkammer 20 ab, ohne dass Extraktionsgut und Pulpe dem Maischabteil 12 und somit der weiteren Verarbeitung in dem Extraktionsapparat 30 entzogen werden.

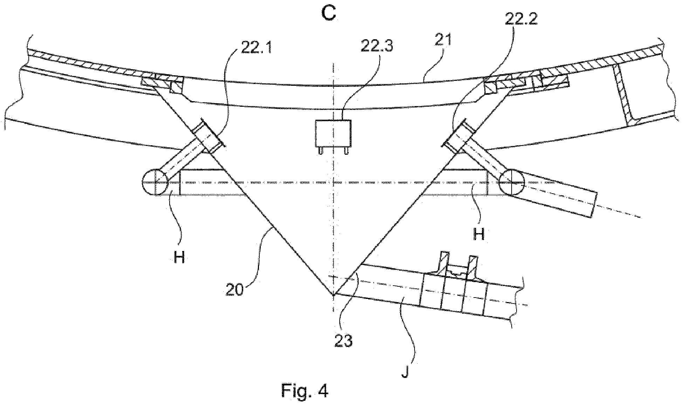

In der Figur 4 ist in einer Teilschnittdarstellung durch die Rohrleitung C in Gestalt der Gemisch-Leitung von der Schnitzelmaische 10 zu dem Extraktionsapparat 30 die Anordnung einer Absetzkammer 20 in Ergänzung zu einer Absetzkammer 20 an der Schnitzelmaische 10 oder allein in der Rohrleitung dargestellt. Der grundsätzliche Aufbau entspricht dem, der in der Figur 3 dargestellt ist und anhand der Figur 3 erläutert wurde. Zur Vermeidung von Wiederholungen wird daher auf die Ausführungen hierzu verwiesen.

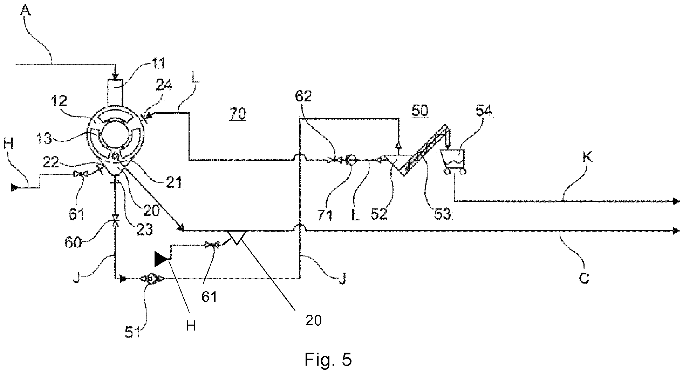

In der Figur 5 ist das Leitungsschema gemäß Figur 2 mit der ergänzten Absetzkammer 20 in der Gemisch-Leitung C dargestellt. Auch hier wird Prozessfluid von dem Extraktionsapparat 30 durch die Prozessfluid-Leitung H durch ein nicht näher bezeichnetes Rückschlagventil zu der Absetzkammer 20 geführt. Die Menge des zugeführten Prozessfluides kann über das Ventil 61 eingestellt werden, über die rückgeführte Menge an Prozessfluid kann zudem der Fluidstrom zu der Absetzkammer 20 in Richtung auf die Rohrleitung C eingestellt und an die jeweiligen Strömungsgeschwindigkeiten und Strömungsbedingungen angepasst werden. Da die Durchmesser der Rohrleitung C vergleichsweise groß sind, jedoch im Vergleich zu dem Durchmesser in der Schnitzelmaische 10 oder dem Maischabteil 12 wesentlich geringer sind, wird das Gemisch aus Zuckerrübenschnitzeln und der Extraktionslösung zusammen mit dem Sand und/oder Feinkies wesentlich zuverlässiger über die Rückhalteeinrichtung 21 oberhalb der Absetzkammer 20 geführt, als diese bei einer Anordnung der Absetzkammer 20 an dem Schnitzelmaischebehälter der Fall ist. So beträgt beispielsweise die Gemisch-Leitung C einen Durchmesser bis zu 1,2 m, wohingegen die Schnitzelmaische 10 einen Durchmesser von bis zu 9 m aufweisen kann. Durch die Anordnung zumindest einer Absetzkammer 20 in der Gemisch-Leitung C kann sich bei gleicher Durchsatzleistung von 4000 t bis 18.000 t pro Tag die notwendige Siebfläche auf 0,1 m² bis 0,5 m² für die Rückhalteeinrichtung 21 reduzieren. Es kann vorgesehen sein, dass mehrere Absetzkammern 20 oder zumindest eine Absetzkammer 20 ohne eine weitere Absetzkammer 20 an der Schnitzelmaische 10 eingesetzt wird und ausreicht, um eine ausreichende Separation des Gemisches aus Zuckerrübenschnitzeln und Extraktionslösung von Sand und Feinkies zu erreichen. Die Absetzkammern sind dann ausschließlich an der Rohrleitung C angeordnet. Aufgrund der schwerkraftbedingten Sedimentation sind die Absetzkammern 20 oder ist die Absetzkammer 20 auch an der Rohrleitung C sinnvollerweise an dem tiefsten Punkt oder an der Unterseite der Rohrleitung C angeordnet.

### Bezugszeichenliste

- 10: Schnitzelmaische
- 11: Einfüllschacht
- 12: Maischabteil
- 13: Rührelement
- 14: Wärmetauschabteil
- 15: Rohsaft-Pumpe

- 20: Absetzkammer
- 21: Rückhalteeinrichtung
- 22: Zuführöffnungen
- 23: Auslassöffnung
- 24: Maischabteil-Anschluss

- 30: Extraktionsapparat
- 31: Extraktionsapparat-Pumpe
- 32, 33: Ausziehschnecken
- 34: Sandabscheider

- 40: Schnitzelpresse
- 41: Presswasser-Behälter
- 42: Presswasser-Pumpe
- 43: Presswasser-Wärmer

- 50: nachgeordneter Sandabscheider
- 51: Sandabscheider-Pumpe
- 52: Trichter
- 53: Schneckenförderer
- 54: Wagen

- 60: Absperrschieber
- 61, 62: Absperrventile
- 70: Rückführeinrichtung
- 71: Rückführpumpe

- A: Einfüllleitung
- B: Saft-Leitung
- C: Gemisch-Leitung
- D: Presswasser-Leitung
- E: Dampfzuführung
- F: Frischwasser-Leitung
- G: Rohsaft-Leitung
- H: Prozessfluid-Leitung
- J: Sandabscheider-Leitung
- K: Transportweg für abgeschiedenen Sand und/oder Feinkies
- L: Rückführ-Leitung

## Patentansprüche

1. Verfahren zum Aufbereiten eines Gemisches, das Zuckerrübenschnitzel als Extraktionsgut, einen Sand- und/oder Feinkiesanteil und eine Zuckerlösung als Extraktionslösung aufweist, mit den Schritten:
(a) Bereitstellen des Gemisches in einem Maischabteil (12) einer Schnitzelmaische (10) und
(b) Trennen von Sand und/oder Feinkies aus dem Gemisch in einer Absetzkammer (20), die an dem Maischabteil (12) und/oder einer Rohrleitung (C), die von der Schnitzelmaische (10) wegführt, angeordnet ist,
**dadurch gekennzeichnet, dass**
(c) zum Trennen des Sandes und/oder Feinkieses von dem Extraktionsgut aufbereitete Extraktionslösung enthaltendes Prozessfluid der Absetzkammer (20) durch einen Zuführanschluss (22) an der Absetzkammer (20) und eine damit gekoppelte Zuführeinrichtung (H) zugeführt und dadurch eine Strömung in Richtung auf das Maischabteil (12) und/oder die Rohrleitung (C) erzeugt wird, wobei die Absetzkammer (20) von dem Maischabteil (12) und/oder der Rohrleitung (C) über eine Rückhalteeinrichtung (21) getrennt ist, um zumindest einen Teil des Extraktionsgutes an einem Eindringen in die Absetzkammer (20) zu hindern.

2. Verfahren nach Anspruch 1, **dadurch gekennzeichnet, dass** das zugeführte Prozessfluid der Absetzkammer (20) in Richtung auf das Maischabteil (12) und/oder die Rohrleitung (C) zugeführt wird.

3. Verfahren nach Anspruch 1 oder 2, **dadurch gekennzeichnet, dass** das zugeführte Prozessfluid mit einer minimalen Strömungsgeschwindigkeit von 0,02 m/s von der Absetzkammer (20) in das Maischabteil (12) und/oder die Rohrleitung (C) geleitet wird.

4. Verfahren nach einem der voranstehenden Ansprüche, **dadurch gekennzeichnet, dass** das Prozessfluid auf eine Dichte eingestellt wird, die ein Absinken von Sand und/oder Feinkies ermöglicht und das Extraktionsgut aufschwimmen lässt.

5. Verfahren nach einem der voranstehenden Ansprüche, **dadurch gekennzeichnet, dass** als Prozessfluid eine Extraktionslösung aus einem der Schnitzelmaische (10) nachgeordneten Extraktionsturm (30) oder einem Sandabscheider (50) verwendet wird.

6. Verfahren nach einem der voranstehenden Ansprüche, **dadurch gekennzeichnet, dass** Sand und/oder Feinkies und Prozessfluid aus der Absetzkammer (20) abgeführt, einem Sandabscheider (50) zugeführt und Prozessfluid von dem Sandabscheider (50) dem Maischabteil (12) und/oder der Absetzkammer (20) zugeführt wird.

7. Verfahren nach Anspruch 6, **dadurch gekennzeichnet, dass** Sand und/oder Feinkies in dem Sandabscheider (50) sedimentiert und aus dem Prozessfluid kontinuierlich abgeführt wird.

8. Schnitzelmaische zum Aufbereiten eines Gemisches, das Zuckerrübenschnitzel als Extraktionsgut, einen Sand- und/oder Feinkiesanteil und eine Extraktionslösung aufweist, mit
(a) einem Maischabteil (12) für das Gemisch,
(b) zumindest einer Absetzkammer (20) für Sand an dem Maischabteil (12) und/oder einer Rohrleitung (C), die von der Schnitzelmaische (10) wegführt, und
(c) einer Rückhalteeinrichtung (21), die zwischen dem Maischabteil (12) und/oder der Rohrleitung (C) und der zumindest einen Absetzkammer (20) angeordnet ist, um zumindest einen Teil des Extraktionsgutes an einem Eindringen in die zumindest eine Absetzkammer (20) zu hindern,
**gekennzeichnet durch**
(d) einen an der zumindest einen Absetzkammer (20) angeordneten Zuführanschluss (22) und einer damit gekoppelten Zuführeinrichtung (H) zum Zuführen von Prozessfluid, das aufbereitete Extraktionslösung enthält, in die zumindest eine Absetzkammer (20).

9. Schnitzelmaische nach Anspruch 8, **dadurch gekennzeichnet, dass** die Rückhalteinrichtung (21) Spalt- oder Ausnehmungsweiten im Bereich zwischen 1 mm und 10 mm und Spaltlängen mit einem Vielfachen der Spaltweite aufweist.

10. Schnitzelmaische nach Anspruch 8 oder 9, **dadurch gekennzeichnet, dass** ein Sandabscheider (50) über eine Rückführeinrichtung (70) zum Rückführen von Prozessfluid mit der Schnitzelmaische (10) gekoppelt ist.

11. Schnitzelmaische nach Anspruch 10, **gekennzeichnet durch** die Rückführeinrichtung (70) mit dem Maischabteil (12) und/oder dem Zuführanschluss (22) gekoppelt ist.

12. Schnitzelmaische nach Anspruch 10 oder 11, **dadurch gekennzeichnet, dass** die Rückführeinrichtung (70) eine Rückführpumpe (71), insbesondere eine Kreiselpumpe, aufweist.

13. Schnitzelmaische nach einem der Ansprüche 10 bis 12, **dadurch gekennzeichnet, dass** der Sandabscheider (50) mit der zumindest einen Absetzkammer (20) über eine Verbindungsleitung (J) gekoppelt ist.

14. Schnitzelmaische nach Anspruch 13, **dadurch gekennzeichnet, dass** die Verbindungsleitung (J) mit einem Auslassanschluss (23) an der zumindest einen Absetzkammer (20) verbunden ist.

15. Schnitzelmaische nach einem der Ansprüche 10 bis 14, **dadurch gekennzeichnet, dass** der Sandabscheider (50) eine Fördereinrichtung (53) aufweist, die Sand und/oder Feinkies aus dem Prozessfluid abtransportiert.

16. Schnitzelmaische nach einem der Ansprüche 8 bis 15, **dadurch gekennzeichnet, dass** die Rückhalteeinrichtung (21) eine freie Öffnungsfläche aufweist, die zwischen 0,3 m² und 1,5 m² bei einer Verarbeitungsleistung von 4.000 t/Tag und 18.000 t/Tag beträgt.

## Claims

1. Process for treating a mixture which comprises sugar beet chips as extraction material, a sand and/or fine gravel fraction and a sugar solution as extraction solution, comprising the steps:
(a) provision of the mixture in a mash section (12) of a chip masher (10) and
(b) separation of sand and/or fine gravel from the mixture in a settling chamber (20) which is arranged on the mash section (12) and/or a pipe (C) which leads away from the chip masher (10),
**characterized in that**
(c) to separate the sand and/or fine gravel from the extraction material, process fluid containing treated extraction solution is fed to the settling chamber (20) through a feed connection (22) on the settling chamber (20) and a feed device (H) coupled thereto and a flow in the direction of the mash section (12) and/or the pipe (C) is generated thereby, where the settling chamber (20) is separated from the mash section (12) and/or the pipe (C) by a retention device (21) in order to prevent at least part of the extraction material from getting into the settling chamber (20).

2. Process according to Claim 1, **characterized in that** the process fluid introduced is fed to the settling chamber (20) in the direction of the mash section (12) and/or the pipe (C).

3. Process according to Claim 1 or 2, **characterized in that** the process fluid introduced is conveyed at a minimum flow velocity of 0.02 m/s from the settling chamber (20) into the mash section (12) and/or the pipe (C).

4. Process according to any of the preceding claims, **characterized in that** the process fluid is adjusted to a density which makes it possible for sand and/or fine gravel to settle and allows the extraction material to float.

5. Process according to any of the preceding claims, **characterized in that** an extraction solution from an extraction tower (30) arranged downstream of the chip masher (10) or from a sand separator (50) is used as process fluid.

6. Process according to any of the preceding claims, **characterized in that** sand and/or fine gravel and process fluid are discharged from the settling chamber (20), fed to a sand separator (50) and process fluid from the sand separator (50) is fed to the mash section (12) and/or the settling chamber (20).

7. Process according to Claim 6, **characterized in that** sand and/or fine gravel are sedimented in the sand separator (50) and continuously discharged from the process fluid.

8. Chip masher for treating a mixture which comprises sugar beet chips as extraction material, a sand and/or fine gravel fraction and an extraction solution, comprising
(a) a mash section (12) for the mixture,
(b) at least one settling chamber (20) for sand on the mash section (12) and/or a pipe (C) which leads away from the chip masher (10), and
(c) a retention device (21) which is arranged between the mash section (12) and/or the pipe (C) and the at least one settling chamber (20) in order to prevent at least part of the extraction material from getting into the at least one settling chamber (20),
**characterized by**
(d) a feed connection (22) arranged on the at least one settling chamber (20) and a feed device (H) coupled thereto for feeding process fluid containing treated extraction solution into the at least one settling chamber (20).

9. Chip masher according to Claim 8, **characterized in that** the retention device (21) has gap or hole widths in the range from 1 mm to 10 mm and gap lengths which are a multiple of the gap width.

10. Chip masher according to Claim 8 or 9, **characterized in that** a sand separator (50) is coupled to the chip masher (10) via a return device (70) for recirculating process fluid.

11. Chip masher according to Claim 10, **characterized by** the return device (70) being coupled to the mash section (12) and/or the feed connection (22).

12. Chip masher according to Claim 10 or 11, **characterized in that** the return device (70) comprises a return pump (71), in particular a centrifugal pump.

13. Chip masher according to any of Claims 10 to 12, **characterized in that** the sand separator (50) is coupled to the at least one settling chamber (20) via a connecting conduit (J).

14. Chip masher according to Claim 13, **characterized in that** the connecting conduit (J) is connected to an outlet connection (23) on the at least one settling chamber (20).

15. Chip masher according to any of Claims 10 to 14, **characterized in that** the sand separator (50) comprises a transport device (53) which transports away sand and/or fine gravel from the process fluid.

16. Chip masher according to any of Claims 8 to 15, **characterized in that** the retention device (21) has a free opening area which is in the range from 0.3 m² to 1.5 m² at a processing throughput of from 4000 t/day to 18,000 t/day.

## Revendications

1. Procédé de traitement d'un mélange comprenant des cossettes de betterave sucrière en tant que matériau d'extraction, une part de sable et/ou de gravier fin et une solution de sucre en tant que solution d'extraction, comprenant les étapes consistant à :
(a) fournir le mélange dans un compartiment de malaxage (12) d'un malaxeur de cosettes (10) ; et
(b) séparer le sable et/ou le gravier fin du mélange dans une chambre de décantation (20) disposée au niveau du compartiment de malaxage (12) et/ou d'un conduit tubulaire (C) s'étendant depuis le malaxeur de cosettes (10),
**caractérisé en ce que**
(c) pour séparer le sable et/ou le gravier fin du matériau d'extraction, un fluide de traitement contenant la solution d'extraction traitée est amené à la chambre de décantation (20) à travers un raccord d'alimentation (22) situé au niveau de la chambre de décantation (20) et à travers un moyen d'alimentation (H) couplé à celui-ci, et ainsi un écoulement est généré en direction du compartiment de malaxage (12) et/ou du conduit tubulaire (C), la chambre de décantation (20) étant séparée du compartiment de malaxage (12) et/ou du conduit tubulaire (C) par un moyen de rétention (21), afin d'empêcher une partie au moins du matériau d'extraction de pénétrer dans la chambre de décantation (20).

2. Procédé selon la revendication 1, **caractérisé en ce que** le fluide de traitement alimenté est amené à la chambre de décantation (20) en direction du compartiment de malaxage (12) et/ou du conduit tubulaire (C).

3. Procédé selon la revendication 1 ou 2, **caractérisé en ce que** le fluide de traitement alimenté est acheminé depuis la chambre de décantation (20) jusque dans le compartiment de malaxage (12) et/ou dans le conduit tubulaire (C) à une vitesse d'écoulement minimum de 0,02 m/s.

4. Procédé selon l'une des revendications précédentes, **caractérisé en ce que** le fluide de traitement est ajusté à une densité qui permet au sable et/ou au gravier fin de descendre et de faire flotter le matériau d'extraction.

5. Procédé selon l'une des revendications précédentes, **caractérisé en ce que** le fluide de traitement utilisé est une solution d'extraction provenant d'une tour d'extraction (30), disposée en aval du malaxeur de cossettes (10), ou d'un séparateur de sable (50).

6. Procédé selon l'une des revendications précédentes, **caractérisé en ce que** le sable et/ou le gravier fin et le fluide de traitement sont évacués hors de la chambre de décantation (20) et amenés à un séparateur de sable (50), et le fluide de traitement provenant du séparateur de sable (50) est amené au compartiment de malaxage (12) et/ou à la chambre de décantation (20).

7. Procédé selon la revendication 6, **caractérisé en ce que** le sable et/ou le gravier fin est sédimenté dans le séparateur de sable (50) et évacué en continu hors du fluide de traitement.

8. Malaxeur de cossettes pour le traitement d'un mélange comprenant des cossettes de betterave sucrière en tant que matériau d'extraction, une part de sable et/ou de gravier fin et une solution d'extraction, comprenant
(a) un compartiment de malaxage (12) pour le mélange,
(b) au moins une chambre de décantation (20) pour le sable au niveau du compartiment de malaxage (12) et/ou un conduit tubulaire (C) qui s'étend depuis le malaxeur de cossettes (10), et
(c) un moyen de rétention (21) disposé entre le compartiment de malaxage (12) et/ou le conduit tubulaire (C) et ladite au moins une chambre de décantation (20) pour empêcher au moins une partie du matériau d'extraction de pénétrer dans ladite au moins une chambre de décantation (20),
**caractérisé par**
(d) un raccord d'alimentation (22) disposé au niveau de ladite au moins une chambre de décantation (20) et un moyen d'alimentation (H) couplé à celui-ci pour alimenter un fluide de traitement, contenant une solution d'extraction traitée, jusque dans ladite au moins une chambre de décantation (20).

9. Malaxeur de cossettes selon la revendication 8, **caractérisé en ce que** le moyen de rétention (21) a des largeurs d'interstice ou d'évidement dans la gamme entre 1 mm et 10 mm et des longueurs d'interstice ayant un multiple de la largeur d'interstice.

10. Malaxeur de cossettes selon la revendication 8 ou 9, **caractérisé en ce qu'**un séparateur de sable (50) est couplé au malaxeur de cossettes (10) via un moyen de retour (70) pour retourner le fluide de traitement.

11. Malaxeur de cossettes selon la revendication 10, **caractérisé en ce que** le moyen de retour (70) est couplé au compartiment de malaxage (12) et/ou au raccord d'alimentation (22).

12. Malaxeur de cossettes selon la revendication 10 ou 11, **caractérisé en ce que** le moyen de retour (70) comprend une pompe de retour (71), en particulier une pompe centrifuge.

13. Malaxeur de cossettes selon l'une des revendications 10 à 12, **caractérisé en ce que** le séparateur de sable (50) est couplé à ladite au moins une chambre de décantation (20) par un conduit de liaison (J).

14. Malaxeur de cossettes selon la revendication 13, **caractérisé en ce que** le conduit de liaison (J) est relié à un raccord de sortie (23) au niveau de ladite au moins une chambre de décantation (20).

15. Malaxeur de cossettes selon l'une des revendications 10 à 14, **caractérisé en ce que** le séparateur de sable (50) comprend un convoyeur (53) qui élimine le sable et/ou le gravier fin hors du fluide de traitement.

16. Malaxeur de cossettes selon l'une des revendications 8 à 15, **caractérisé en ce que** le moyen de rétention (21) présente une zone d'ouverture libre qui est comprise entre 0,3 m² et 1,5 m² pour une capacité de traitement entre 4.000 t/jour et 18.000 t/jour.
